(19) **Europäisches Patentamt**
European Patent Office
Office européen des brevets

(11) **EP 1 667 861 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(21) Anmeldenummer: **04763013.2**

(22) Anmeldetag: **22.06.2004**

(51) Int Cl.:
***B60G 17/052*** *(2006.01)*

(86) Internationale Anmeldenummer:
**PCT/EP2004/006709**

(87) Internationale Veröffentlichungsnummer:
**WO 2005/035283 (21.04.2005 Gazette 2005/16)**

(54) **VERFAHREN ZUR REGELUNG DER LUFTMENGE IN EINER NIVEAUREGELANLAGE FÜR EIN KRAFTFAHRZEUG**

METHOD FOR CONTROLLING THE AIR FLOW IN A LEVEL CONTROL SYSTEM FOR A MOTOR VEHICLE

PROCEDE DE REGULATION DE LA QUANTITE D'AIR DANS UN SYSTEME DE REGULATION PAR NIVEAU POUR VEHICULE A MOTEUR

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.09.2003 DE 10343094**

(43) Veröffentlichungstag der Anmeldung:
**14.06.2006 Patentblatt 2006/24**

(73) Patentinhaber: **Continental Teves AG & Co. OHG 60488 Frankfurt (DE)**

(72) Erfinder:
• **HEIN, Dierk**
  **30900 Wedemark (DE)**
• **ILIAS, Heike**
  **30900 Wedemark (DE)**
• **FOLCHERT, Uwe**
  **31867 Lauenau (DE)**

(56) Entgegenhaltungen:
**DE-A- 4 243 577      DE-C- 10 122 567
DE-C- 10 160 972      DE-C- 19 959 556
US-A- 4 836 511**

EP 1 667 861 B1

## Beschreibung

Die Erfindung betrifft ein Verfahren zur Regelung der Luftmenge in einer Niveauregelanlage für ein Kraftfahrzeug, die folgende Bestandteile enthält:

- einen Kompressor
- einen Druckluftspeicher, der mit Luft aus der Atmosphäre befüllbar und der in die Atmosphäre entleerbar ist,
- mindestens eine Luftfeder, wobei die Luftfeder über den Kompressor mit dem Druckluftspeicher derart in Verbindung steht, dass Druckluft aus der Luftfeder in den Druckluftspeicher und in die umgekehrte Richtung überführbar ist
- wobei die Regelung derart erfolgt, dass sich die Luftmenge innerhalb bestimmter Grenzen befindet.

Ein derartiges Verfahren zur Regelung der Luftmenge in einer Niveauregelanlage für ein Kraftfahrzeug ist aus der DE 101 22 567 C1 bekannt. Bei dem aus dieser Druckschrift bekannten Verfahren erfolgt die Regelung der Luftmenge innerhalb bestimmter Grenzen eines Luftmengenintervalls, das so gewählt werden kann, dass die Luftmenge auch bei Temperaturschwankungen im Laufe eines längeren Zeitraumes innerhalb des Luftmengenintervalles liegt. Hierbei wird die untere Grenze des Luftmengenintervalls für eine niedrige Umgebungstemperatur (dies entspricht einer niedrigen Luftmenge) und die obere Grenze des Luftmengenintervalls für eine hohe Umgebungstemperatur (dies entspricht einer hohen Luftmenge) vorgegeben. Beispielsweise kann für die Niveauregelanlage eines Kraftfahrzeuges ein Luftmengenintervall vorgegeben werden, das einen Temperaturbereich von 15° C +/- 20°C (d. h., das Luftmengenintervall reicht von -5° C bis 35° C) abdeckt. Geht man davon aus, dass sich das Kraftfahrzeug in einer mittleren Umgebungstemperatur von 15° C bewegt, so verlässt die in der Niveauregelanlage befindliche Luftmenge auch bei größeren Temperaturschwankungen von +/- 20° C das vorgegebene Luftmengenintervall nicht. Eine Nachregelung der Luftmenge aufgrund von Temperaturschwankungen der Umgebungstemperatur ist somit bei dem aus der DE 10122 567 C1 bekannten Verfahren nicht notwendig.

Es ist somit festzustellen, dass aus der DE 101 60 972 C1 ein Verfahren zur Regelung der Luftmenge in einer Niveauregelanlage für ein Kraftfahrzeug bekannt ist, dass einen geringen Regelbedarf erfordert und somit zur Schonung und Langzeithaltbarkeit aller Komponenten (insbesondere des Kompressors) der Niveauregelanlage beiträgt. Es ist jedoch festzustellen, dass es bei dem aus dieser Druckschrift bekannten Verfahren aufgrund der Größe des vorgegebenen Luftmengenintervalls dazu kommen kann, dass die von den Fahrzeugherstellern spezifizierten Regelgeschwindigkeiten nicht eingehalten werden können. Dies ist insbesondere dann der Fall, wenn sich die Luftmenge in der Niveauregelanlage in Nähe der unteren oder der oberen Grenze des Luftmengenintervalls befindet. Wenn sich die Luftmenge in der Nähe der unteren Grenze des Luftmengenintervalls befindet, kann das Kraftfahrzeug aus einem niedrigen Niveau nicht schnell genug angehoben werden, da sich eine zu geringe Luftmenge in der Niveauregelanlage befindet. Falls sich hingegen die Luftmenge in der Nivauregelanlage in der Nähe der oberen Grenze des Luftmengenintervalls befindet, kann das Kraftfahrzeug aus einem hohen Niveau nicht schnell genug abgesenkt werden, da sich zuviel Luftmenge in der Niveauregelanlage befindet, die nicht genügend schnell in den Druckluftspeicher bzw. in die Atmosphäre überführt werden kann.

Der Erfindung liegt die Aufgabe zugrunde, ein Verfahren zur Regelung der Luftmenge in einer Niveauregelanlage für ein Kraftfahrzeug zu schaffen, das einerseits eine hohe Regelgeschwindigkeit der Niveauregelanlage ermöglicht und andererseits nicht zu häufigen Regelungen in der Niveauregelanlage führt.

Gemäß den kennzeichnenden Merkmalen des Anspruchs 1 wird die Aufgabe dadurch gelöst, dass

- zwei Luftmengenintervalle vorgegeben sind, wobei das erste Luftmengenintervall innerhalb des zweiten Luftmengenintervalles liegt und das erste Luftmengenintervall eine erste Obergrenze und eine erste Untergrenze und das zweite Luftmengenintervall eine zweite Obergrenze und eine zweite Untergrenze hat und
- in jedem Fall eine Regelung der Luftmenge in das zweite Luftmengenintervall hinein erfolgt, wenn die Luftmenge vor der Regelung außerhalb des zweiten Luftmengenintervalls liegt, und
- unter bestimmten Voraussetzungen eine Regelung der Luftmenge in das erste Luftmengenintervall hinein vorgenommen wird, wenn die Luftmenge vor der Regelung außerhalb des ersten Luftmengenintervalls und innerhalb des zweiten Luftmengenintervalls liegt.

Der Grundgedanke der Erfindung ist darin zu sehen, dass ein erstes schmales Luftmengenintervall vorgegeben wird, das vollständig innerhalb eines zweiten breiten Luftmengenintervalls liegt. Das erste Luftmengenintervall deckt einen schmalen Temperaturbereich ab und wird vorzugsweise so gewählt, dass die Niveauregelanlage in diesem Luftmengenintervall sämtlichen Anforderungen an die Regelgeschwindigkeit genügt. Eine Regelung der Luftmenge in das erste Luftmengenintervall hinein wird nur unter bestimmten vorgegebenen Voraussetzungen vorgenommen, die anzeigen, dass eine hohe Regelgeschwindigkeit der Niveauregelanlage gewünscht ist. Dies ist im Betrieb des Kraftfahrzeuges der Fall. Solange das Kraftfahrzeug in Betrieb ist, erfolgt eine Regelung der Luftmenge in der Niveauregelanlage derart, dass (nachdem die Luftmenge in das erste Luftmengenintervall hineingeregelt wurde) die Luftmenge immer im ersten Intervall bleibt. Damit ist während des Betriebes des Kraftfahrzeuges eine hohe Regelgeschwindigkeit gewährleistet. Das zweite Luftmengenintervall wird vorzugsweise so gewählt, dass es einen großen Temperaturbereich abdeckt.

Mit der Erfindung wird der Vorteil erreicht, dass in der Niveauregelanlage nur wenige Regelungen der Luftmenge notwendig sind. Dies ist darauf zurückzuführen, dass das zweite Luftmengenintervall sehr breit gewählt wird und die Luftmenge in der Niveauregelanlage somit nur selten außerhalb dieses Luftmengenintervalls liegt. Mit der Erfindung wird ferner der Vorteil erzielt, dass gleichzeitig eine hohe Regelgeschwindigkeit der Niveauregelanlage gewährleistet ist, wenn dies gewünscht ist. In diesem Fall wird eine Regelung innerhalb des ersten schmalen Luftfederintervalls vorgenommen.

Gemäß einer Weiterbildung der Erfindung nach Anspruch 2 wird für den Fall, dass die Luftmenge außerhalb des zweiten Luftmengenintervalls liegt, eine Regelung derart vorgenommen, dass die Luftmenge nach der Regelung

- zwischen der zweiten Untergrenze und der ersten Untergrenze liegt, wenn die Luftmenge vor der Regelung unterhalb der zweiten Untergrenze gelegen hat, und
- zwischen der zweiten Obergrenze und der ersten Obergrenze liegt, wenn die Luftmenge vor der Regelung oberhalb der zweiten Obergrenze gelegen hat.

Mit der Weiterbildung wird der Vorteil erreicht, dass nur eine geringe Luftmenge in die Niveauregelanlage aufgefüllt bzw. aus dieser abgelassen werden muss, wenn die Luftmenge in der Niveauregelanlage außerhalb des zweiten Luftmengenintervalls liegt. Somit sind nur kurze Kompressorlaufzeiten nötig, was der Lebensdauer des Kompressor zugute kommt.

Eine Weiterbildung der Erfindung gemäß Anspruch 3 ist dadurch gekennzeichnet, dass, wenn die Luftmenge außerhalb des ersten Luftmengenintervalls und innerhalb des zweiten Luftmengenintervalls liegt, eine Regelung der Luftmenge in das erste Luftmengenintervall hinein unter der Voraussetzung vorgenommen wird, dass das Kraftfahrzeug zuvor in Betrieb genommen wurde. Der Vorteil dieser Weiterbildung ist darin zu sehen, dass eine Inbetriebnahme des Kraftfahrzeuges einfach erkannt werden kann (z. B. daran, dass der Motor läuft) und dass der Betrieb des Kraftfahrzeuges auf einfache Art und Weise die Notwendigkeit einer hohen Regelgeschwindigkeit der Niveauregelanlage anzeigt. Solange das Kraftfahrzeug sich im Betrieb befindet, wird die Luftmenge in der Niveauregelanlage derart geregelt, dass sie sich immer innerhalb des ersten schmalen Luftmengenintervalls befindet, so dass während des gesamten Betriebes des Kraftfahrzeuges eine hohe Regelgeschwindigkeit gewährleistet ist. Erst wenn das Kraftfahrzeug abgestellt wird, lässt die Regelung der Niveauregelanlage zu, dass die Luftmenge außerhalb des ersten Luftmengenintervalls liegt. Eine Regelung der Luftmenge wird erst dann wieder vorgenommen, wenn die Luftmenge das zweite Luftmengenintervall verlässt.

Gemäß einer Weiterbildung der Erfindung nach Anspruch 4 wird eine Regelung der Luftmenge in das erste Luftmengenintervall hinein unter der zusätzlichen Voraussetzung vorgenommen, dass nach der Inbetriebnahme des Kraftfahrzeuges eine bestimmte Zeitspanne verstrichen ist. Der Vorteil dieser Weiterbildung ist darin zu sehen, dass eine Regelung der Luftmenge in das erste Luftmengenintervall hinein erst dann vorgenommen wird, wenn sich die Temperatur der Luftmenge in der Niveauregelanlage an die Umgebungstemperatur, in der das Kraftfahrzeug betrieben wird, angepasst hat. Durch dieses Vorgehen können unnötige Regelungen innerhalb der Niveauregelanlage vermieden werden. Ein weiterer Vorteil der Weiterbildung ist darin zu sehen, dass ausschließlich eine einfache Zeitmessung durchgeführt zu werden braucht. Eine zusätzliche Messung der Luftmenge während der Zeitspanne ist nicht notwendig.

Gemäß einer Weiterbildung der Erfindung nach Anspruch 5 werden nach der Inbetriebnahme des Kraftfahrzeuges Messungen der Luftmenge vorgenommen und eine Regelung der Luftmenge in das erste Luftmengenintervall hinein wird unter der zusätzlichen Voraussetzung vorgenommen, dass sich die gemessene Luftmenge stabilisiert hat. Der Vorteil dieser Weiterbildung ist darin zu sehen, dass eine Regelung der Luftmengen in das erste Luftmengenintervall erst dann erfolgt, wenn durch Messungen sichergestellt ist, dass sich die gemessene Luftmenge stabilisiert hat.

Eine Weiterbildung der Erfindung nach Anspruch 6 ist dadurch gekennzeichnet, dass, wenn die Luftmenge unterhalb der zweiten Untergrenze liegt und sich das Niveau des Kraftfahrzeuges unterhalb eines sicheren Niveaus befindet, zunächst das Kraftfahrzeug in ein sicheres Niveau angehoben wird und danach eine Regelung der Luftmenge derart erfolgt, dass die Luftmenge nach der Regelung über der zweiten Untergrenze liegt. Mit dieser Weiterbildung wird also erreicht, dass eine Regelung des Kraftfahrzeuges in ein sicheres Niveau Vorrang vor der Regelung der Luftmenge in der Niveauregelanlage hat. Hierdurch wird der Vorteil erreicht, dass das Kraftfahrzeug möglichst schnell in ein sicheres Niveau überführt wird. Bei dem sicheren Niveau, auf das das Kraftfahrzeug angehoben wird, kann es sich beispielsweise um ein vorgegebenes Tiefniveau handeln, in dem das Kraftfahrzeug eine ausreichende Bodenfreiheit hat und somit eine Beschädigung des Unterbodens des Kraftfahrzeuges weitgehend ausgeschlossen ist.

Gemäß einer Weiterbildung der Erfindung nach Anspruch 7 wird zur Anhebung des Kraftfahrzeues in ein sicheres Niveau zunächst die in dem Druckluftspeicher vorhandene Druckluft genutzt und, falls diese zur Anhebung in das sichere Niveau nicht ausreicht, wird zur weiteren Anhebung des Kraftfahrzeuges Druckluft aus der Atmosphäre in Luftfedern der Niveauregelanlage angesaugt. Durch die Weiterbildung wird erreicht, dass nur mit dem Kompressor ein niedriger Druckluftanteil von der Atmosphäre in die Niveauregelanlage überführt werden muss. Hierdurch wird der Vorteil erreicht, dass der Kompressor nur über einen kurzen Zeitraum die große Druckdifferenz zwischen dem Atmosphärendruck und dem Druck in der Niveauregelanlage überwinden muss und somit eine hohe Kompressorbelastung minimiert wird.

Gemäß Anspruch 8 wird für den Fall, dass Druckluft aus der Atmosphäre in die Niveauregelanlage überführt wird, wie folgt vorgegangen:

- die Luftmenge $L_1$ in der Niveauregelanlage wird bestimmt
- es wird Druckluft aus der Atmosphäre direkt in mindestens eine der Luftfedern (2a,..., 2d) überführt
- danach wird die Luftmenge $L_2$ in der Niveauregelanlage bestimmt
- die Differenzluftmenge $\Delta L= L_1-L_2$ wird bestimmt
- anhand der Differenzluftmenge $\Delta L$ wird eine Spülluftmenge bestimmt,
- die Spülluftmenge wird aus der Atmosphäre über einen Lufttrockner (5) in den Druckluftspeicher (4) überführt,
- eine der Spülluftmenge entsprechende Luftmenge wird aus dem Druckluftspeicher über den Lufttrockner (5) in die Atmosphäre abgelassen.

Bei dieser Weiterbildung wird die Druckluft aus der Atmosphäre direkt -d.h. ohne vorher über einen Lufttrockner geführt zu werden- in die Luftfedern überführt. Dies bringt den Vorteil mit sich, dass es nicht zu einem Druckverlust der Druckluft aus der Atmosphäre in dem Lufttrockner kommt. Es ist jedoch festzustellen, dass bei der Überführung von Druckluft aus der Atmosphäre direkt in die Luftfedern Feuchtigkeit in die Niveauregelanlage eingebracht wird, da die direkt eingeführte Druckluft nicht getrocknet wird. Damit wird die Luftmenge in der Niveauregelanlage insgesamt feuchter. Um dies auszugleichen, wird eine Spülluftmenge über den Lufttrockner in die Niveauregelanlage überführt. Die Spülluftmenge gelangt also als getrocknete Luft in die Niveauregelanlage, so dass durch Vermischung der Luftmengen die gesamte Luftmenge in der Niveauregelanlage wieder trockener wird. Die Spülluftmenge wird hierbei so bemessen, dass sich nach Überführen dieser in die Niveauregelanlage die gewünschte Feuchtigkeit der gesamten Luftmenge in der Niveauregelanlage einstellt. Eine der Spülluftmenge entsprechende Luftmenge wird später über den Lufttrockner wieder in die Atmosphäre abgelassen. Hierdurch wird der Lufttrockner regeneriert und steht für neue Trocknungsvorgänge zur Verfügung.

Gemäß einer Weiterbildung der Erfindung nach Anspruch 9 wird die Spülluftmenge einmalig oder in mehreren Zyklen in den Druckluftspeicher überführt. Ein einmaliges Überführen hat den Vorteil, dass in einem kurzen Zeitraum die gesamte Spülluftmenge in der Niveauregelanlage ist. Ein zyklisches Überführen hat den Vorteil, dass der Kompressor in diesem Fall nur kurze Zeitintervalle zu laufen braucht, so dass einer starken Kompressorerwärmung sicher vorgebeugt ist.

Nach Anspruch 10 wird für den Fall, dass Druckluft aus der Atmosphäre in die Niveauregelanlage überführt wird, wie folgt vorgegangen:

- die Luftmenge $L_1$ in der Niveauregelanlage wird bestimmt
- es wird Druckluft aus der Atmosphäre über einen Lufttrockner in die Niveauregelanlage überführt
- danach wird die Luftmenge $L_2$ in der Niveauregelanlage bestimmt
- die Differenzluftmenge $\Delta L=L_1-L_2$ wird bestimmt
- anhand der Differenzluftmenge $\Delta L$ wird eine Regenerationsluftmenge bestimmt, die notwendig ist, um den Lufttrockner zu regenerieren
- zumindest die Regenerationsluftmenge wird aus der Atmosphäre über den Lufttrockner in die Niveauregelanlage überführt und zur Regeneration des Lufttrockners über den Lufttrockner wieder in die Atmosphäre abgelassen.

Der Vorteil dieser Weiterbildung ist darin zu sehen, dass der Lufttrockner nach einem Auffüllen der Niveauregelanlage mit Druckluft aus der Atmosphäre sofort regeneriert wird und wieder für weitere Trocknungsvorgänge zur Verfügung steht. Die Weiterbildung macht sich zunutze, dass die zur Regeneration eines Lufttrockners benötigte Regenerationsluftmenge wesentlich kleiner ist als die zuvor zugeführte Luftmenge $\Delta L$. Das Auffüllen der Regenerationsluftmenge kann in einem einzigen Auffüllvorgang erfolgen. In diesem Fall wird die Regenerationsluftmenge vorzugsweise sofort in einem einzigen Ablassvorgang über den Lufttrockner in die Atmospäre abgelassen. Es ist ebenfalls möglich, die Regenerationsluftmenge in mehreren Schritten getaktet aufzufüllen und abzulassen.

Gemäß einer Weiterbildung der Erfindung nach Anspruch 11 wird (falls die Luftmenge L in der Niveauregelanlage unter der zweiten Untergrenze $U_2$ liegt) zusätzlich zur Spülluftmenge oder Regenerationsluftmenge eine Luftmenge $L_z$ über den Lufttrockner in den Druckluftspeicher überführt, die so bemessen ist, dass nach Überführen dieser Luftmenge $L_z$ die Luftmenge L in der Niveauregelanlage über der zweiten Untergrenze $U_2$ liegt. Vorzugsweise wird die Luftmenge $L_z$ so bemessen, dass nach Überführen dieser Luftmenge $L_z$ die Luftmenge L in der Niveauregelanlage über

der ersten Untergrenze $U_1$ liegt die Der Vorteil dieser Weiterbildung ist darin zu sehen, dass die zusätzliche Luftmenge $L_z$ getrocknet wird, bevor sie in die Niveauregelanlage kommt.

Eine Weiterbildung der Erfindung nach Anspruch 12 ist dadurch gekennzeichnet, dass, wenn die Luftmenge oberhalb der zweiten Obergrenze liegt und sich das Niveau des Kraftfahrzeuges oberhalb eines sicheres Niveaus befindet, Druckluft aus den Luftfedern gleichzeitig in den Druckluftspeicher der Niveauregelanlage und in die Atmosphäre abgelassen wird. Durch diese Weiterbildung wird der Vorteil erreicht, dass ein schnelles Absenken des Kraftfahrzeuges in ein vorgegebenes sicheres Niveau möglich ist. Dies ist insbesondere bei stark motorisierten Geländewagen notwendig, da diese mit einer extrem großen Bodenfreiheit im Gelände und unmittelbar danach evtl. mit hoher Geschwindigkeit auf einer normalen Straße bewegt werden können. Weist der Geländewagen auf der normalen Straße immer noch die große Bodenfreiheit auf, so kann es bei hohen Geschwindigkeiten (in Kurven) zu einem Umkippen des Geländewagens kommen.

Anspruch 13 betrifft ein Verfahren zur Regelung der Luftmenge in einer Niveauregelanlage, dass dadurch gekennzeichnet ist, dass solange Druckluft aus den Luftfedern (2a,..,2d) abgelassen wird, bis sich das Kraftfahrzeug in einem sicheren Niveau befindet.

Ein Ausführungsbeispiel und weitere Vorteile der Erfindung werden im Zusammenhang mit den nachfolgenden Figuren erläutert, darin zeigt:

Fig. 1 eine geschlossene Niveauregelanlage in schematischer Darstellung
Fig. 2 ein Diagramm
Fig. 3 ein Diagramm
Fig. 4 ein Diagramm
Fig. 5 eine geschlossene Niveauregelanlage in schematischer Darstellung.

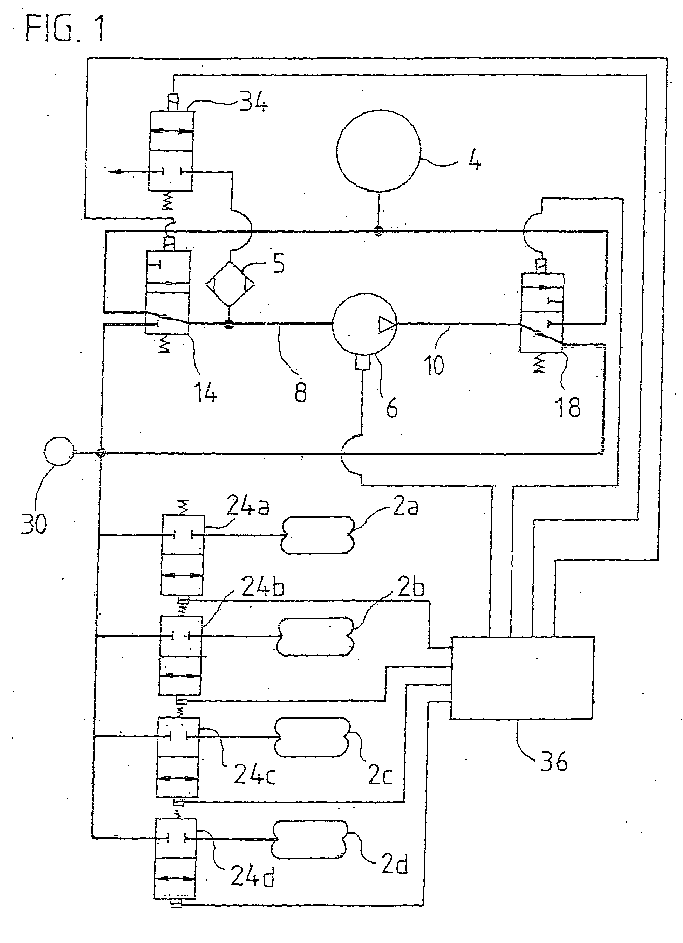

Figur 1 zeigt eine geschlossene Niveauregelanlage in schematischer Darstellung, die Luftfedern 2a bis 2d, einen Druckluftspeicher 4, einen Lufttrockner 5, einen Kompressor 6 mit einem Eingang 8 und einem Ausgang 10, steuerbare Wegeventile 14, 18 24a bis 24d und 34, einen Drucksensor 30 und eine Steuereinheit 36 aufweist. Mit Hilfe des Kompressors 6 ist Druckluft aus dem Druckluftspeicher 4 über die Wegeventile 14, 18 und 24a bis 24d in jede der Luftfedern 2a bis 2d überführbar, wenn der Aufbau des Kraftfahrzeuges angehoben werden soll. Darüber hinaus ist mit Hilfe des Kompressors 6 aus jeder der Luftfedern 2a bis 2d über die Wegeventile 24a bis 24d, 14 und 18 Druckluft in den Druckluftspeicher 4 überführbar, wenn der Fahrzeugaufbau des Kraftfahrzeuges gesenkt und dazu Druckluft aus den Luftfedern 2a bis 2d abgelassen werden soll. Ferner kann mit Hilfe des Kompressors 6 über das Wegeventil 34, den Lufttrockner 5 und das Wegeventil 18 Druckluft aus der Atmosphäre in den Druckluftspeicher 4 überführt werden, um die Luftmenge in der Niveauregelanlage zu erhöhen. Darüber hinaus kann aus dem Druckluftspeicher 4 über das Wegeventil 14, den Lufttrockner 5 und das Wegeventil 34 Druckluft aus dem Druckluftspeicher 4 in die Atmosphäre abgelassen werden, um eine zu hohe Luftmenge in der Niveauregelanlage zu reduzieren.

Darüber hinaus kann mit Hilfe des Kompressors 6 über das Wegeventil 34, den Lufttrockner 5, die Wegeventile 18 und 24a bis 24d Druckluft aus der Atmosphäre in jede einzelne der Luftfedern 2a bis 2d überführt werden, wenn der Fahrzeugaufbau des Kraftfahrzeuges mit Hilfe von Druckluft aus der Atmosphäre angehoben werden soll. Ferner kann aus den Luftfedern 2a bis 2d über die Wegeventile 24a bis 24d, 14, den Lufttrockner 5 und das Wegeventil 34 Druckluft aus jeder der Luftfedern 2a bis 2d in die Atmosphäre abgelassen werden, wenn der Fahrzeugaufbau des Kraftfahrzeuges abgesenkt und dazu Druckluft in die Atmosphäre abgeführt werden soll.

Des Weiteren kann mit Hilfe des Drucksensors 30 der Druck sowohl in dem Druckluftspeicher 4 als auch in den einzelnen Luftfedern 2a bis 2d gemessen werden. Wie die einzelnen Funktionen realisiert werden und in welchen Schaltzuständen sich die steuerbaren Wegeventile 14, 18, 24a bis 24d und 34 befinden, soll hier nicht näher ausgeführt werden, da es an sich bekannt, und beispielsweise in der DE 199 59 556 C1 ausführlich beschrieben ist. Sämtliche Funktionen werden von der Steuereinheit 36 veranlasst, die dazu die steuerbaren Wegeventile 14, 18, 24a bis 24d und 34 ansteuert, so dass diese in die notwendigen Schaltzustände übergehen.

Neben den oben genannten Funktionen kann die Luftmenge L in der Niveauregelanlage bestimmt werden, wobei sich gezeigt hat, dass eine ausreichend genaue Bestimmung möglich ist, wenn die Luftmenge in dem Druckluftspeicher 4 und in den Luftfedern 2a bis 2d bestimmt wird, da die Luftmenge in den Druckluftleitungen zu vernachlässigen ist. Die Luftmenge L berechnet sich wie folgt:

$$L = p_1 V_1 + p_2 V_2 + p_3 V_3 + p_4 V_4 + p_s V_s.$$

Mit $p_1$ bis $p_4$: Druck in den Luftfedern 2a bis 2d;

$V_1$ bis $V_4$: Volumen der Luftfedern 2a bis 2d;
$p_s$: Druck im Druckluftspeicher 4;
$V_s$: Volumen des Druckluftspeichers 4.

Die Bestimmung der Luftmenge L in einer geschlossenen Niveauregelanlage ist an sich bekannt und z. B. ausführlich in der DE 101 22 567 C1 beschrieben. Der Gleichung für die Bestimmung der Luftmenge L ist zu entnehmen, dass die Luftmenge L von der Temperatur abhängig ist (da die einzelnen Summanden pV gemäß dem idealen Gasgesetz von der Temperatur abhängig sind). Ein Ansteigen der Temperatur bedeutet ein Ansteigen der Luftmenge und ein Absinken der Temperatur bedeutet ein Absinken der Luftmenge.

Wenn über den Lufttrockner 5 Druckluft aus der Niveauregelanlage in die Atmosphäre abgelassen wird, wird dieser regeneriert. Die Regeneration des Lufttrockners 5 wird vorgenommen, wenn zuvor Druckluft aus Atmosphäre in die Niveauregelanlage überführt wurde, da sich hierdurch die Feuchtigkeit im Lufttrockner erhöht. Im Folgenden wird erläutert, wie die Regeneration im Einzelnen vorgenommen wird: Zunächst wird vor dem Auffüllen der Niveauregelanlage mit Druckluft die Luftmenge $L_1$ in der Niveauregelanlage bestimmt. Danach wird Druckluft aus der Atmosphäre über den Lufttrockner 5 in die Niveauregelanlage überführt. Wenn genügend Druckluft in die Niveauregelanlage überführt worden ist, wird die Luftmenge $L_2$ in der Niveauregelanlage bestimmt. Danach wird die Differenzluftmenge $\Delta L = L_1 - L_2$ wird bestimmt und anhand der Differenzluftmenge $\Delta L$ wird eine Regenerationsluftmenge bestimmt, die notwendig ist, um den Lufttrockner 5 zu regenerieren (in die Bestimmung der Regenerationsluftmenge kann zusätzlich einen Information über den Lufttrockner 5 einfließen). In einem weiteren Schritt wird zumindest die Regenerationsluftmenge aus der Atmosphäre über den Lufttrockner 5 in die Niveauregelanlage überführt und danach zur Regeneration des Lufttrockners 5 über den Luftrockner wieder in die Atmosphäre abgelassen. Ein derartiges Vorgehen hat u.a. den Vorteil, dass aus der Atmosphäre einerseits die Luftmenge in die Niveauregelanlage überführt wird, die dort unabhängig von der Regeneration des Lufttrockners 5 notwendig ist (da für die Regeneration eine zusätzliche Luftmenge aus der Atmosphäre einerseits in die Niveauregelanlage überführt wird) und andererseits der Lufttrockner 5 regeneriert wird.

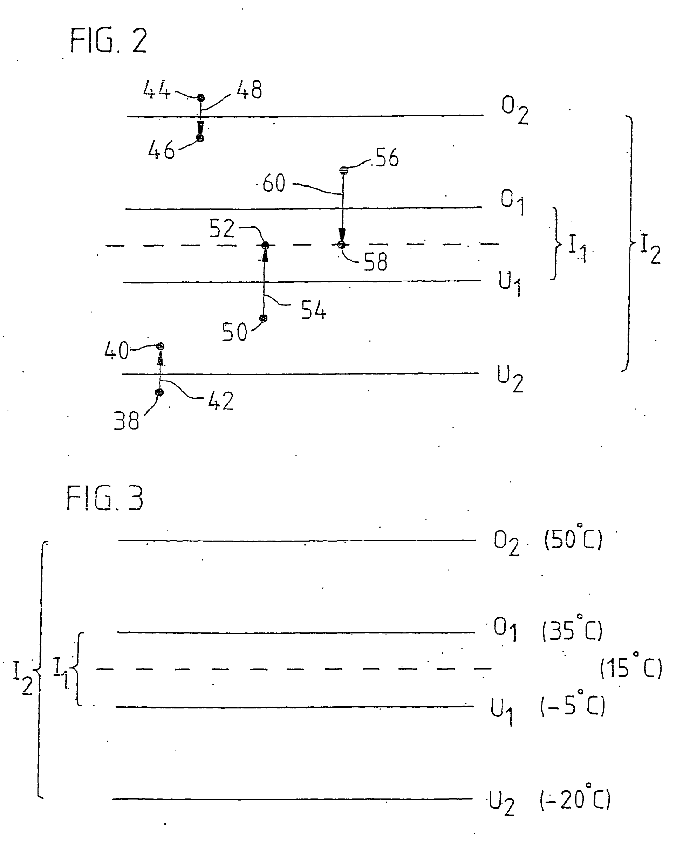

Im Zusammenhang mit den Figuren 2 bis 4 wird im Folgenden erläutert, wie die Luftmenge L in der Niveauregelanlage mit Hilfe der Steuereinheit 36 (s. Figur 1) im einzelnen geregelt wird.

Der Figur 2 ist ein erstes Luftmengenintervall $I_1$ zu entnehmen mit einer ersten Untergrenze $U_1$ und einer ersten Obergrenze $O_1$ (Luftmengenintervall $I_1 = (U_1; O_1)$). Der Figur 2 ist ferner ein zweites Luftemengenintervall $I_2$ mit einer zweiten Untergrenze $U_2$ und einer zweiten Obergrenze $O_2$ zu entnehmen (Luftmengenintervall $I_2 = (U_2; O_2)$). Das erste Luftmengenintervall $I_1$ liegt vollständig innerhalb des zweiten Luftmengenintervalls $I_2$, d. h. $O_1 < O_2$ und $U_1 > U_2$. Die beiden Luftmengenintervalle $I_1$ und $I_2$ sind in der Steuereinheit 36 (s. Figur 1) gespeichert. Wenn sich die Luftmenge in dem ersten schmalen Luftmengenintervall befindet, ist eine hohe Regelgeschwindigkeit (sowohl beim Absenken als auch beim Anheben) der Niveauregelanlage möglich. $I_1$ deckt Schwankungen der Luftmenge in einem kleinen Temperaturintervall und $I_2$ deckt Schwankungen der Luftmenge in einem großen Temperaturintervall ab.

Die Regelung der Luftmenge L in der Niveauregelanlage wird durch die Steuereinheit 36 wie folgt vorgenommen: Angenommen, die aktuell bestimmte Luftmenge L in der Niveauregelanlage liegt unterhalb der Untergrenze $U_2$ des Luftmengenintervalls $I_2$, wie es durch den Punkt 38 angedeutet ist. In diesem Fall wird durch die Steuereinheit 36 eine Erhöhung der Luftmenge veranlasst, und zwar solange, bis die aktuelle Luftmenge L innerhalb des Luftmengenintervalls $I_2$ liegt. Vorzugsweise wird eine Regelung derart vorgenommen, dass nach der Regelung die Luftmenge L in der Niveauregelanlage zwischen $U_1$ und $U_2$ liegt, so wie es durch den Punkt 40 angedeutet ist (der Regelvorgang ist durch den Pfeil 42 angedeutet). Eine Vergrößerung der Luftmenge erfolgt bei dieser Regelung dadurch, dass der Kompressor 6 über die Wegeventile 34 und 18 der Druckluftspeicher 4 aus der Atmosphäre befüllt wird (s. Figur 1). Durch die Befüllung des Druckluftspeichers 4 wird sichergestellt, dass das Kraftfahrzeug nicht unerwünscht angehoben wird, da keine Druckluft in die Luftfedern 2a - 2d überführt wird.

Es ist ebenfalls möglich, dass die aktuelle Luftmenge L in der Niveauregelanlage oberhalb der Obergrenze $O_2$ des Luftmengenintervalls $I_2$ liegt, wie es durch den Punkt 44 angedeutet ist. In diesem Fall wird durch die Steuereinheit 36 veranlasst, dass die Luftmenge L solange reduziert wird, bis die aktuelle Luftmenge L innerhalb des zweiten Luftmengenintervalls $I_2$ liegt. Vorzugsweise wird hierbei die Luftmenge L solange reduziert, bis die aktuelle Luftmenge L zwischen $O_1$ und $O_2$ liegt, wie es durch den Punkt 46 angedeutet ist (der Regelvorgang ist durch den Pfeil 48 angedeutet). Die Reduzierung der Luftmenge L wird durch die Steuereinheit 36 veranlasst und führt dazu, dass aus dem Druckluftspeicher 4 über die Wegeventile 14 und 34 Druckluft in die Atmosphäre abgelassen wird (s. Figur 1). Durch das Ablassen von Druckluft aus dem Druckluftspeicher 4 wird sichergestellt, dass sich bei einer Reduzierung der Luftmenge L in der Niveauregelanlage das Niveau des Fahrzeugaufbaus des Kraftfahrzeuges nicht verändert, da keine Druckluft aus den Luftfedern 2a bis 2d abgelassen wird.

Die durch die Pfeile 42 und 48 angedeuteten Regelvorgänge, bei denen vor der Regelung die aktuelle Luftmenge L außerhalb des zweiten Luftmengenintervalls $I_2$ gelegen hat, werden in jedem Fall und zu jeder Zeit (d. h. unabhängig vom Betriebsstand des Kraftfahrzeuges; die Regelvorgänge werden also sowohl vorgenommen, wenn sich das Kraftfahrzeug außer Betrieb befindet (was z. B. daran erkannt werden kann, dass der Motor nicht läuft), als auch im Betrieb des Kraftfahrzeuges) vorgenommen, wenn eine entsprechende Luftmenge L festgestellt wird.

Demgegenüber findet eine Regelung der Luftmenge L ausschließlich unter bestimmten Voraussetzungen statt, wenn die Luftmenge vor der Regelung außerhalb des ersten Luftmengenintervalls $I_1$ und innerhalb des zweiten Luftmengenintervalls $I_2$ liegt. Wenn die Voraussetzungen nicht erfüllt sind, findet eine Regelung nicht statt. Dies wird im Folgenden erläutert: Angenommen, vor der Regelung wird eine aktuelle Luftmenge L festgestellt, die unterhalb der Untergrenze $U_1$ des Luftmengenintervalls $I_1$ und oberhalb der Untergrenze $U_2$ des Luftmengenintervalls $I_2$ liegt, wie es durch den Punkt 50 angedeutet ist. In diesem Fall wird unter bestimmten Voraussetzungen eine Regelung der Luftmenge L in das erste Luftmengenintervall $I_1$ hinein vorgenommen, wie es durch den Punkt 52 angedeutet ist (der Regelvorgang ist durch den Pfeil 54 angedeutet). Vorzugsweise wird die Luftmenge L hierbei solange erhöht, bis die aktuelle Luftmenge L in der Niveauregelanlage in der Mitte (angedeutet durch die strichlinierte Linie) des Luftmengenintervalls $I_1$ liegt. Hierdurch wird der Vorteil erreicht, dass nach der Regelung der Luftmenge L diese die größtmögliche Schwankungsbreite hat, ohne dass das Luftmengenintervall $I_1$ verlassen wird. Somit ist eine weitere Nachregelung nur selten erforderlich. Die Erhöhung des Luftmenge L in der Niveauregelanlage erfolgt genauso, wie es bereits oben im Zusammenhang mit dem Regelvorgang vom Punkt 38 zum Punkt 40 erläutert worden ist.

Es ist ebenfalls möglich, dass die aktuelle Luftmenge L oberhalb der Obergrenze $O_1$ und unterhalb der Obergrenze $O_2$ liegt, so wie es durch den Punkt 56 angedeutet ist. In diesem Fall wird, wenn bestimmte Voraussetzungen erfüllt sind, die aktuelle Luftmenge L in der Niveauregelanlage solange reduziert bis diese in dem Luftmengenintervall $I_1$ liegt, wie es durch den Punkt 58 angedeutet ist (der dazugehörigen Regelvorgang ist durch den Pfeil 60 angedeutet). Auch in diesem Fall wird vorzugsweise soviel Druckluft aus der Niveauregelanlage abgelassen, bis die aktuelle Luftmenge L in der Niveauregelanlage in der Mitte des Luftmengenintervalls $I_1$ liegt, um den oben genannten Vorteil zu erzielen. Das Ablassen der Druckluft aus der Niveauregelanlage erfolgt genauso, wie es im Zusammenhang mit dem Regelvorgang vom Punkt 44 zum Punkt 46 bereits erläutert worden ist (s. oben).

Die Voraussetzungen, die erfüllt sein müssen, damit die Steuereinheit 36 (s. Figur 1), die durch die Pfeile 54 und 60 angedeuteten Regelungen in das Intervall $I_1$ hinein veranlasst, können unterschiedlich und z. B. wie folgt gewählt und in der Steuereinheit 36 festgelegt werden:

- Eine erste Voraussetzung kann darin bestehen, dass das Kraftfahrzeug, in dem sich die Niveauregelanlage befindet, in Betrieb genommen wird.
- Eine zweite alternative Voraussetzung kann darin bestehen, dass sich das Kraftfahrzeug nach der Inbetriebnahme bereits eine bestimmte zeitlang im Betrieb befindet.
- Eine dritte alternative Voraussetzung kann darin bestehen, dass sich das Kraftfahrzeug im Betrieb befindet und Messungen der Luftmenge L der Niveauregelanlage ergeben haben, dass sich die aktuelle Luftmenge L stabilisiert hat.

Die Aufzählung ist beispielhaft, weitere alternative Voraussetzungen sind denkbar. Nachdem unter Vorliegen der festgelegten Voraussetzung in das erste Luftmengenintervall $I_1$ hinein geregelt wurde, erfolgt eine Regelung der Luftmenge, solange das Kraftfahrzeug im Betrieb ist, derart, dass die Luftmenge während des Betriebes im ersten Luftmengenintervall $I_1$ bleibt. Erst wenn durch die Steuereinheit 36 festgestellt wird, dass sich das Kraftfahrzeug nicht mehr im Betrieb befindet, wird von der Steuereinheit 36 zugelassen, dass die Luftmenge L das Luftmengenintervall $I_1$ verlässt.

Figur 3 zeigt ein Diagramm mit zwei Luftmengenintervallen $I_1$ und $I_2$, die sich grundsätzlich genauso zueinander verhalten, wie die im Zusammenhang mit der Figur 2 erläuterten Luftmengenintervalle. Die Luftmengenintervalle $I_1$ und $I_2$ sind in der Steuereinheit 36 (s. Figur 1) gespeichert. Bei dem Diagramm gemäß Figur 3 wird davon ausgegangen, dass sich das Kraftfahrzeug, in dem die Niveauregelanlage eingebaut ist, hauptsächlich in einer Umgebungstemperatur gefahren wird, die im Durchschnitt ca. 15° C beträgt (z. B. im Sommer in Westeuropa). Das Luftmengenintervall $I_1$ wird nun so festgelegt, dass die Luftmenge L bei 15° C in der Mitte dieses Luftmengenintervalls liegt. Darüber hinaus soll die Untergrenze $U_1$ des Luftmengenintervalls $I_1$ durch die Luftmenge L definiert werden, die aus der Luftmenge L bei 15° C hervorgeht, wenn sich die Temperatur um 20° C auf -5° C erniedrigt. Die Obergrenze $O_1$ des Luftmengenintervalls $I_1$ soll durch eine Luftmenge L definiert sein, die aus der Luftmenge L bei 15° C hervorgeht, wenn sich die Temperatur um 20° C auf 35° C erhöht. Das Luftmengenintervall $I_1$ deckt somit Luftmengenschwankungen in einem Temperaturbereich von -5° C bis 35° C ab. Das Luftmengenintervall $I_2$ wird so gewählt, dass es Luftmengenschwankungen in einem Temperaturbereich von - 20° C an der Untergrenze $U_2$ von $I_2$ bis 50° C an der Obergrenze $O_2$ abdeckt.

Wenn sich die Luftmenge L in dem Luftmengenintervall $I_1$ befindet, weist die Niveauregelanlage eine hohe Regelgeschwindigkeit auf, d. h., der Aufbau des Kraftfahrzeuges kann sowohl schnell angehoben als auch abgesenkt werden. Falls sich die Luftmenge L außerhalb der $I_1$ befindet, findet eine Regelung in das Luftmengenintervall $I_1$ hinein statt, wenn die festgelegte Voraussetzung (s. o.) erfüllt ist. Solange das Kraftfahrzeug in Betrieb ist, erfolgt eine Regelung der Luftmenge L derart, dass (nachdem die Luftmenge in $I_1$ hineingeregelt wurde) die Luftmenge in $I_1$ bleibt. Damit ist während des Betriebes des Kraftfahrzeuges eine hohe Regelgeschwindigkeit gewährleistet.

Beispiel:

(Bei dem Beispiel wird davon ausgegangen, dass in der Steuereinheit die erste Voraussetzung festgelegt ist, die darin besteht, dass das Kraftfahrzeug in Betrieb genommen wird.)

Wenn das Kraftfahrzeug an einem heißen Sommertag auf einem Parkplatz abgestellt wird, heizt es sich stark auf und es kann dazu kommen, dass die Lufttemperatur in der Niveauregelanlage über 35° C ansteigt und somit die aktuelle Luftmenge in der Niveauregelanlage oberhalb der Obergrenze $O_1$ liegt. Solange die aktuelle Luftmenge im Stillstand des Kraftfahrzeuges zwischen $O_1$ und $O_2$ liegt, erfolgt keine Regelung der Luftmenge. Liegt die Luftmenge jedoch oberhalb von $O_2$ (steigt die Temperatur also über 50° C), wird durch die Steuereinheit 36 (s. Figur 1) der Niveauregelanlage eine Regelung derart vorgenommen, dass im Stillstand des Kraftfahrzeuges nach der Regelung die Luftmenge wieder zwischen $O_1$ und $O_2$ liegt (entsprechende Regelungen werden vorgenommen, wenn die aktuelle Luftmenge L unter $U_1$ absinkt, die Lufttemperatur also unter - 5° C sinkt). Wird das Kraftfahrzeug in Betrieb genommen, wird die Luftmenge L in das Luftmengenintervall $I_1$ hineingeregelt und dort solange durch eventuelle Nachregelungen gehalten, wie das Kraftfahrzeug in Betrieb ist.

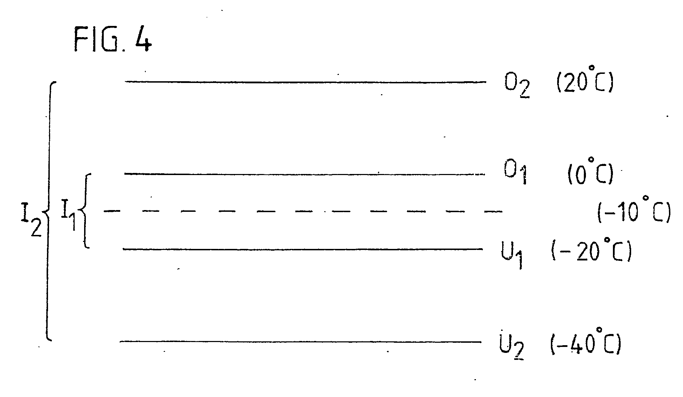

Die Figur 4 zeigt ebenfalls ein Diagramm mit zwei Luftmengenintervallen $I_1$ und $I_2$, bei dem davon ausgegangen wird, dass das Kraftfahrzeug, in das die Niveauregelanlage eingebaut ist, hauptsächlich bei einer Durchschnittstemperatur von - 10° C in Betrieb ist (z. B. im Winter in Skandinavien). Das Luftmengenintervall $I_1$ deckt Luftmengenschwankungen in einem Temperaturbereich von - 20° C bis 0° C und das Luftmengenintervall $I_2$ deckt einen Temperaturbereich von - 40° C bis 20° C ab. Auch hier ist im Luftmengenintervall $I_1$ eine hohe Regelgeschwindigkeit der Niveauregelanlage gewährleistet. Die Regelung der Niveauregelanlage erfolgt auch hier analog zu den Regelungen, wie sie bereits im Zusammenhang mit den Figuren 2 und 3 erläutert worden sind, mit dem einzigen Unterschied, dass andere Temperaturgrenzen bei der Regelung berücksichtigt werden.

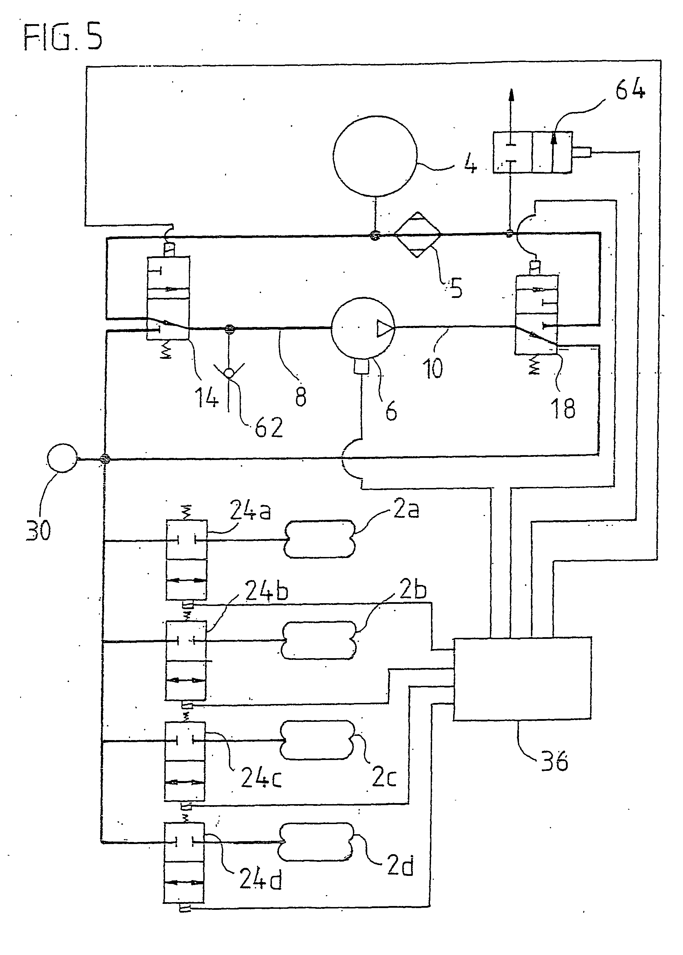

Figur 5 zeigt eine Niveauregelanlage in schematischer Darstellung, die weitestgehend der in der Figur 1 gezeigten Niveauregelanlage entspricht, so dass im Folgenden nur auf die Unterschiede eingegangen werden soll. Ein Unterschied ist darin zu sehen, dass die Niveauregelanlage gemäß Figur 5 anstelle des in der Figur 1 gezeigten steuerbaren Wegeventils 34 ein Rückschlagventil 62 aufweist. Das Rückschlagventil 62 ist so orientiert, dass es zur Atmosphäre hin sperrt. Über das Rückschlagventil 62 kann mit Hilfe des Kompressors 6 Druckluft aus der Atmosphäre in den Druckluftspeicher 4 überführt werden. Dazu werden von der Steuereinheit 36 zunächst die steuerbaren Wegeventile 14 und 18 angesteuert, so dass diese von dem in der Figur 5 gezeigten Schaltzustand jeweils in den anderen Schaltzustand übergehen. Danach wird von der Steuereinheit 36 der Kompressor 6 angesteuert, so dass dieser beginnt zu laufen. Durch den Unterdruck, der in dem Kompressor 6 entsteht, öffnet sich das Rückschlagventil 62, so dass über das Rückschlagventil 62, den Kompressor 6, das Wegeventil 18 und einen Lufttrockner 5, der zwischen dem Wegeventil 18 und den Druckluftspeicher 4, Druckluft in den Druckluftspeicher 4 überführt wird. Hierbei wird die überführte Druckluft in dem Lufttrockner 5 getrocknet, so dass sie getrocknet in den Druckluftspeicher 4 gelangt.

Über das Rückschlagventil 62 kann ebenfalls Druckluft aus der Atmosphäre über den Kompressor 6 direkt in eine oder mehrere der Luftfedern 2a bis 2d überführt werden, um das Niveau des Kraftfahrzeuges anzuheben. Dies ist insbesondere dann notwendig, wenn die Luftmenge L in der Niveauregelanlage unterhalb der zweiten Untergrenze $U_2$ liegt und sich das Niveau des Kraftfahrzeuges unterhalb eines sicheren Niveaus befindet. In diesem Fall wird das Kraftfahrzeug zunächst in ein sicheres Niveau angehoben und danach wird eine Regelung der Luftmenge L derart vorgenommen, dass die Luftmenge L nach der Regelung wieder zumindest über der zweiten Untergrenze $U_2$ liegt (vorzugsweise wird eine Regelung der Luftmenge L derart vorgenommen, dass die Luftmenge L nach der Regelung wieder über der ersten Untergrenze U1 liegt). Hierbei wird zur Anhebung des Kraftfahrzeuges in das sichere Niveau zunächst die in dem Druckluftspeicher 4 befindliche Druckluft genutzt (dies erfolgt so, wie es bereits im Zusammenhang mit der Figur 1 erläutert worden ist). Falls die in dem Druckluftspeicher 4 befindliche Druckluft zur Anhebung des Kraftfahrzeuges in ein sicheres Niveau nicht ausreicht, wird zur weiteren Anhebung des Kraftfahrzeuges Druckluft aus der Atmosphäre angesaugt. Dies geschieht wie folgt: Wenn die in dem Druckluftspeicher 4 vorhandene Druckluft erschöpft ist und der Kompressor 6 weiterhin Druckluft ansaugt, so entsteht in dem Kompressor 6 ein Unterdruck, aufgrund dessen sich das Rückschlagventil 62 öffnet. Infolgedessen wird mit Hilfe des Kompressors 6 Druckluft aus der Atmosphäre über das Rückschlagventil 62 angesaugt. Die angesaugte Druckluft gelangt ausgehend von dem Kompressor 6 über das Wegeventil 18 in eine oder mehrere der Luftfedern 2a bis 2d (in welche der Luftfedern 2a bis 2d die Druckluft gelangt, hängt davon ab, welche der steuerbaren Wegeventile 24a bis 24d zuvor von der Steuereinheit 36 "durchgeschaltet" worden sind).

Die obigen Ausführungen zeigen, dass die Druckluft direkt aus der Atmosphäre, d. h. ohne dass sie zuvor über den Lufttrockner 5 geführt wird, in eine oder mehrere der Luftfedern 2a bis 2d überführt wird. Dies bedeutet, dass die Druckluft nicht getrocknet worden ist, und somit die Feuchtigkeit in der Luftmenge L der Niveauregelanlage ansteigt. Es wird wie folgt verfahren, um diesen Anstieg auszugleichen: Unmittelbar bevor Druckluft über das Rückschlagventil 62 in die Niveauregelanlage überführt wird, wird die Luftmenge $L_1$ in der Niveauregelanlage bestimmt. Danach wird Druckluft aus der Atmosphäre über das Rückschlagventil 62 solange direkt in eine oder mehrere der Luftfedern 2a bis 2d überführt, bis das Kraftfahrzeug das sichere Niveau erreicht hat. Nach Abschluss des Anhebevorganges des Kraftfahrzeuges wird die Luftmenge $L_2$ in der Niveauregelanlage bestimmt und danach wird die Differenzluftmenge $\Delta L = L_1 - L_2$ bestimmt (die Bestimmung der Luftmengen $L_1$, $L_2$ und $\Delta L$ erfolgt so, wie es bereits im Zusammenhang mit der Figur 1 erläutert worden ist). Anhand der Differenzluftmenge $\Delta L$ wird eine Spülluftmenge bestimmt, die aus der Atmosphäre über den Lufttrockner 5 in den Druckluftspeicher 4 überführt wird (dies erfolgt so, wie es oben bereits allgemein erläutert worden ist). Die Spülluftmenge wird in dem Lufttrockner 5 getrocknet, so dass sie als trockene Luft in den Druckluftspeicher 4 gelangt. Im Laufe der Zeit vermischt sich in der Niveauregelanlage die in dem Druckluftspeicher 4 befindliche Druckluft mit der in den Luftfedern 2a bis 2d befindlichen Druckluft, so dass die Feuchtigkeit in der gesamten Luftmenge L wieder abnimmt. Die Spülluftmenge, die zuvor in die Niveauregelanlage überführt wird, wird so bemessen, dass nach der Durchmischung die gewünschte Feuchtigkeit in der Luftmenge L zumindest erreicht oder sogar unterschritten wird (hierzu kann in der Steuereinheit 36 der Niveauregelanlage ein Kennfeld abgelegt werden, das für jede berechnete Differenzluftmenge $\Delta L$ eine Spülluftmenge vorgibt; gegebenenfalls können mehrere Kennfelder für mehrere Umgebungstemperaturen festgelegt werden, so dass die Bestimmung der notwendigen Spülluftmenge in Abhängigkeit der Umgebungstemperatur erfolgen kann).

Zur Regeneration des Lufttrockners 5 wird später aus dem Druckluftspeicher 4 über den Lufttrockner 5 und das steuerbare Wegeventil 64 Druckluft in die Atmosphäre abgelassen. Dazu wird von der Steuereinheit 36 das Wegeventil 64 angesteuert, so dass dies von dem in der Figur 5 gezeigten Schaltzustand in den anderen Schaltzustand übergeht. Es wird eine Luftmenge aus dem Druckluftspeicher 4 über den Lufttrockner 5 und das Wegeventil 64 in die Atmosphäre abgelassen, die der Spülluftmenge entspricht. Hierdurch wird der Lufttrockner 5 regeneriert, wobei aus dem Lufttrockner 5 wesentlich mehr Feuchtigkeit in die Atmosphäre überführt wird, als zuvor durch Überführen der Spülluftmenge aus der Atmosphäre in den Druckluftspeicher 4 "eingebracht" wurde (da zur Regeneration eines Lufttrockners immer nur eine kleinere Menge abgeführt werden muss, als zuvor getrocknet worden ist). Dies bedeutet, dass der Lufttrockner 5 im Hinblick auf die Spülluftmenge "überregeneriert" wird und bei dem beschriebenen Ablassvorgang auch Luftfeuchtigkeit in die Atmosphäre überführt werden kann, die zuvor evtl. aufgrund anderer Regelvorgänge in der Niveauregelanlage in den Lufttrockner 5 gekommen ist.

Die Spülluftmenge kann in einem einzigen Schritt oder in mehreren Zyklen aus der Atmosphäre über das Rückschlagventil 62, den Kompressor 6, das Wegeventil 18 und den Kompressor 5 in den Druckluftspeicher 4 überführt werden.

Zusätzlich zu der Spülluftmenge wird eine Luftmenge $L_z$ aus der Atmosphäre über das Rückschlagventil 62, den Kompressor 6, das Wegeventil 18 und den Lufttrockner 5 in den Druckluftspeicher 4 überführt. Die Luftmenge $L_z$ ist so bemessen, dass nach Überführen dieser Luftmenge $L_z$ die gesamte Luftmenge L in der Niveauregelanlage zumindest wieder über der zweiten Untergrenze $U_2$ liegt (vorzugsweise wird die Luftmenge $L_z$ so bemessen, dass nach Überführen dieser Luftmenge $L_z$ die gesamte Luftmenge L in der Niveauregelanlage wieder über der ersten Untergrenze $U_1$ liegt; zur Erinnerung: Es wurde bei dem beschriebenen Ausführungsbeispiel davon ausgegangen, dass sich die Gesamtluftmenge L unterhalb der zweiten Untergrenze $U_2$ liegt und sich das Kraftfahrzeug unterhalb eines sicheren Niveaus befindet).

**Bezugszeichenliste**

(Teil der Beschreibung)

| | |
|---|---|
| 2a, ..., 2d | Luftfeder |
| 4 | Druckluftspeicher |
| 5 | Lufttrockner |
| 6 | Kompressor |
| 8 | Eingang des Kompressors |
| 10 | Ausgang des Kompressors |
| 14 | steuerbares Wegeventil |

| 18 | steuerbares Wegeventil |
|---|---|
| 24a, ..., 24d | steuerbare Wegeventile |
| 30 | Drucksensor |
| 34 | steuerbares Wegeventil |
| 36 | Steuereinheit |
| 38 | Punkt |
| 40 | Punkt |
| 42 | Pfeil |
| 44 | Punkt |
| 46 | Punkt |
| 48 | Pfeil |
| 50 | Punkt |
| 52 | Punkt |
| 54 | Pfeil |
| 56 | Punkt |
| 58 | Punkt |
| 60 | Pfeil |
| 62 | Rückschlagventil |
| 64 | steuerbares Wegeventil |

**Patentansprüche**

1. Verfahren zur Regelung der Luftmenge L in einer Niveauregelanlage für ein Kraftfahrzeug, die folgende Bestandteile enthält:

- einen Kompressor (6)
- einen Druckluftspeicher (4), der mit Luft aus der Atmosphäre befüllbar und der in die Atmosphäre entleerbar ist,
- mindestens eine Luftfeder (2a,.., 2d), wobei die Luftfeder (2a,.., 2d) über den Kompressor (6) mit dem Druckluftspeicher (4) derart in Verbindung steht, dass Druckluft aus der Luftfeder (2a,.., 2d) in den Druckluftspeicher (4) und in die umgekehrte Richtung überführbar ist,

wobei die Regelung derart erfolgt, dass sich die Luftmenge L innerhalb bestimmter Grenzen befindet ,
**dadurch gekennzeichnet, dass**
- zwei Luftmengenintervalle $I_1$, in vorgegeben sind, wobei das erste Luftmengenintervall $I_1$ innerhalb des zweiten Luftmengenintervalles $I_2$ liegt und das erste Luftmengenintervall $I_1$ eine erste Obergrenze $O_1$ und eine erste Untergrenze $U_1$ und das zweite Luftmengenintervall $I_2$ eine zweite Obergrenze $O_2$ und eine zweite Untergrenze $U_2$ hat und
- in jedem Fall eine Regelung der Luftmenge L in das zweite Luftmengenintervall $I_2$ hinein vorgenommen wird, wenn die Luftmenge L vor der Regelung außerhalb des zweiten Luftmengenintervalls $I_2$ liegt, und
- unter bestimmten vorgegebenen Voraussetzungen eine Regelung der Luftmenge L in das erste Luftmengen-

intervall $I_1$ hinein vorgenommen wird, wenn die Luftmenge L vor der Regelung außerhalb des ersten Luftmengenintervalls $I_1$ und innerhalb des zweiten Luftmengenintervalls $I_2$ liegt.

2. Verfahren zur Regelung der Luftmenge L in einer Niveauregelanlage für ein Kraftfahrzeug nach Anspruch 1, **dadurch gekennzeichnet, dass** für den Fall, dass die Luftmenge L außerhalb des zweiten Luftmengenintervalls $I_2$ liegt, eine Regelung derart vorgenommen wird, dass die Luftmenge L nach der Regelung

   - zwischen der zweiten Untergrenze $U_2$ und der ersten Untergrenze $U_1$ liegt, wenn die Luftmenge L vor der Regelung unterhalb der zweiten Untergrenze $U_2$ gelegen hat, und
   - zwischen der zweiten Obergrenze $O_2$ und der ersten Obergrenze $O_1$ liegt, wenn die Luftmenge L vor der Regelung oberhalb der zweiten Obergrenze $O_2$ gelegen hat.

3. Verfahren zur Regelung der Luftmenge L in einer Niveauregelanlage für ein Kraftfahrzeug nach einem der Ansprüche 1 bis 2, **dadurch gekennzeichnet, dass**, wenn die Luftmenge L außerhalb des ersten Luftmengenintervalls $I_1$ und innerhalb des zweiten Luftmengenintervalls $I_2$ liegt, eine Regelung der Luftmenge L in das erste Luftmengenintervall $I_1$ hinein unter der Voraussetzung vorgenommen wird, dass das Kraftfahrzeug zuvor in Betrieb genommen wurde.

4. Verfahren zur Regelung der Luftmenge L in einer Niveauregelanlage für ein Kraftfahrzeug nach Anspruch 3, **dadurch gekennzeichnet, dass** eine Regelung der Luftmenge L in das erste Luftmengenintervall $I_1$ hinein unter der zusätzlichen Voraussetzung vorgenommen wird, dass nach der Inbetriebnahme eine bestimmte Zeitspanne verstrichen ist.

5. Verfahren zur Regelung der Luftmenge in einer Niveauregelanlage für ein Kraftfahrzeug nach Anspruch 3, **dadurch gekennzeichnet, dass** nach der Inbetriebnahme des Kraftfahrzeuges Messungen der Luftmenge L vorgenommen werden und eine Regelung der Luftmenge L in das erste Luftmengenintervall $I_1$ hinein unter der zusätzlichen Voraussetzung vorgenommen wird, dass sich die gemessene Luftmenge L stabilisiert hat.

6. Verfahren zur Regelung der Luftmenge L in einer Niveauregelanlage für ein Kraftfahrzeug nach einem der Ansprüche 1 bis 5, **dadurch gekennzeichnet, dass**, wenn die Luftmenge L unterhalb der zweiten Untergrenze $U_2$ liegt und sich das Niveau des Kraftfahrzeuges unterhalb eines sicheren Niveaus befindet, zunächst das Kraftfahrzeug in ein sicheres Niveau angehoben wird und danach eine Regelung der Luftmenge L derart erfolgt, dass die Luftmenge L nach der Regelung über der zweiten Untergrenze $U_2$ liegt.

7. Verfahren zur Regelung der Luftmenge L in einer Niveauregelanlage für ein Kraftfahrzeug nach Anspruch 6, **dadurch gekennzeichnet, dass** zur Anhebung des Kraftfahrzeuges in ein sicheres Niveau zunächst die in dem Druckluftspeicher (4) vorhandene Druckluft genutzt wird und, falls diese zur Anhebung in das sichere Niveau nicht ausreicht, zur weiteren Anhebung des Kraftfahrzeuges Druckluft aus der Atmosphäre angesaugt wird.

8. Verfahren zur Regelung der Luftmenge L in einer Niveauregelanlage für ein Kraftfahrzeug nach Anspruch 7, **dadurch gekennzeichnet, dass** für den Fall, dass Druckluft aus der Atmosphäre in die Niveauregelanlage überführt wird, wie folgt vorgegangen wird:

   - die Luftmenge $L_1$ in der Niveauregelanlage wird bestimmt
   - es wird Druckluft aus der Atmosphäre direkt in mindestens eine der Luftfedern (2a,..., 2d) überführt
   - danach wird die Luftmenge $L_2$ in der Niveauregelanlage bestimmt
   - die Differenzluftmenge $\Delta L = L_1 - L_2$ wird bestimmt
   - anhand der Differenzluftmenge $\Delta L$ wird eine Spülluftmenge bestimmt,
   - die Spülluftmenge wird aus der Atmosphäre über einen Lufttrockner (5) in den Druckluftspeicher (4) überführt,
   - eine der Spülluftmenge entsprechende Luftmenge wird aus dem Druckluftspeicher (4) über den Lufttrockner (5) in die Atmosphäre abgelassen.

9. Verfahren zur Regelung der Luftmenge L in einer Niveauregelanlage für ein Kraftfahrzeug nach Anspruch 8, **dadurch gekennzeichnet, dass** die Spülluftmenge einmalig oder in mehreren Zyklen in den Druckluftspeicher (4) überführt wird.

10. Verfahren zur Regelung der Luftmenge L in einer Niveauregelanlage für ein Kraftfahrzeug nach einem der Ansprüche 1 bis 7, **dadurch gekennzeichnet, dass** für den Fall, dass Druckluft aus der Atmosphäre in die Niveauregelanlage überführt wird, wie folgt vorgegangen wird:

- die Luftmenge $L_1$ in der Niveauregelanlage wird bestimmt
- es wird Druckluft aus der Atmosphäre über einen Lufttrockner (5) in die Niveauregelanlage überführt
- danach wird die Luftmenge $L_2$ in der Niveauregelanlage bestimmt
- die Differenzluftmenge $\Delta L = L_1 - L_2$ wird bestimmt
- anhand der Differenzluftmenge $\Delta L$ wird eine Regenerationsluftmenge bestimmt, die notwendig ist, um den Lufttrockner (5) zu regenerieren
- zumindest die Regenerationsluftmenge wird aus der Atmosphäre über den Lufttrockner (5) in die Niveauregelanlage überführt und zur Regeneration des Lufttrockners (5) über den Lufttrockner wieder in die Atmosphäre abgelassen.

11. Verfahren zur Regelung der Luftmenge L in einer Niveauregelanlage für ein Kraftfahrzeug nach einem der Ansprüche 8 bis 10, **dadurch gekennzeichnet, dass** zusätzlich zur Spülluftmenge oder Regenerationsluftmenge eine Luftmenge $L_z$ über den Lufttrockner (5) in den Druckluftspeicher (4) überführt wird, die so bemessen ist, dass nach Überführen dieser Luftmenge $L_z$ die Luftmenge L in der Niveauregelanlage über der zweiten Untergrenze $U_2$ liegt.

12. Verfahren zur Regelung der Luftmenge L in einer Niveauregelanlage für ein Kraftfahrzeug nach einem der Ansprüche 1 bis 11, **dadurch gekennzeichnet, dass**, wenn die Luftmenge L oberhalb der zweiten Obergrenze $O_2$ liegt und sich das Niveau des Kraftfahrzeuges oberhalb eines sicheren Niveaus befindet, Druckluft aus den Luftfedern (2a,.., 2d) gleichzeitig in den Druckluftspeicher (4) und in die Atmosphäre abgelassen wird.

13. Verfahren zur Regelung der Luftmenge L in einer Niveauregelanlage für ein Kraftfahrzeug nach Anspruch 12, **dadurch gekennzeichnet, dass** solange Druckluft aus den Luftfedern (2a,..,2d) abgelassen wird, bis sich das Kraftfahrzeug in einem sicheren Niveau befindet.

14. Niveauregelanlage für ein Kraftfahrzeug zur Durchführung des Verfahrens nach einem der Ansprüche 1 bis 9, die folgende Bestandteile enthält:

- einen Kompressor (6)
- einen Druckluftspeicher (4), der mit Luft aus der Atmosphäre befüllbar und der in die Atmosphäre entleerbar ist,
- mindestens eine Luftfeder (2a,..,2d), wobei die Luftfeder (2a,..,2d) über den Kompressor (6) mit dem Druckluftspeicher (4) derart in Verbindung steht, dass Druckluft aus der Luftfeder (2a,..,2d) in den Druckluftspeicher (4) und in die umgekehrte Richtung überführbar ist,

eine Steuereinheit (36), die eine Regelung der Luftmenge L in der Niveauregelanlage derart vornimmt, dass sich die Luftmenge L innerhalb bestimmter Grenzen befindet,
**dadurch gekennzeichnet, dass**
in der Steuereinheit (36) zwei Luftmengenintervalle $I_1$, $I_2$ vorgegeben sind, wobei das erste Luftmengenintervall $I_1$ innerhalb des zweiten Luftmengenintervalles $I_2$ liegt und das erste Luftmengenintervall $I_1$ eine erste Obergrenze $O_1$ und eine erste Untergrenze $U_1$ und das zweite Luftmengenintervall $I_2$ eine zweite Obergrenze $O_2$ und eine zweite Untergrenze $U_2$ hat.

## Claims

1. Method for controlling the air flow L in a level control system for a motor vehicle, which contains the following components:

- a compressor (6),
- a compressed air accumulator (4) which can be filled with air from the atmosphere and which can be emptied into the atmosphere,
- at least one pneumatic spring (2a, ..., 2d), the pneumatic spring (2a, ..., 2d) being connected to the compressed air accumulator (4) via the compressor (6) in such a way that compressed air can be transferred out of the pneumatic spring (2a, ..., 2d) into the compressed air accumulator (4) and in the opposite direction, control taking place in such a way that the air flow L is located within specific limits,
**characterized in that**
- two air flow intervals $I_1$, $I_2$ are predetermined, the first air flow interval $I_1$ lying within the second air flow interval $I_2$, and the first air flow interval $I_1$ having a first upper limit $O_1$ and a first lower limit $U_1$ and the second air flow interval $I_2$ a second upper limit $O_2$ and a second lower limit $U_2$, and,

- in any event, control of the air flow L into the second air flow interval $I_2$ being carried out when the air flow L lies outside the second air flow interval $I_2$ before control, and,
- under specific predetermined preconditions, control of the air flow L into the first air flow interval $I_1$ is carried out when the air flow L lies outside the first air flow interval $I_1$ and within the second air flow interval $I_2$ before control.

2. Method for controlling the air flow L in the level control system for a motor vehicle according to Claim 1, **characterized in that**, in the event that the air flow L lies outside the second air flow interval $I_2$, control is carried out in such a way that, after control, the air flow L

    - lies between the second lower limit $U_2$ and the first lower limit $U_1$ when the air flow L lay below the second lower limit $U_2$ before control, and,
    - lies between the second upper limit $O_2$ and the first upper limit $O_1$ when the air flow L lay above the second upper limit $O_2$ before control.

3. Method for controlling the air flow L in the level control system for a motor vehicle according to either one of Claims 1 and 2, **characterized in that**, when the air flow L lies outside the first air flow interval $I_1$ and within the second air flow interval $I_2$, control of the air flow L into the first air flow interval $I_1$ is carried out under the precondition that the motor vehicle has previously been put into operation.

4. Method for controlling the air flow L in the level control system for a motor vehicle according to Claim 3, **characterized in that** control of the air flow L into the first air flow interval $I_1$ is carried out under the additional precondition that a specific time span has elapsed after the motor vehicle has been put into operation.

5. Method for controlling the air flow in a level control system for a motor vehicle according to Claim 3, **characterized in that**, after the motor vehicle has been put into operation, measurements of the air flow L are carried out, and control of the air flow L into the first air flow interval $I_1$ is carried out under the additional precondition that the measured air flow L has stabilized.

6. Method for controlling the air flow L in a level control system for a motor vehicle according to one of Claims 1 to 5, **characterized in that**, when the air flow L lies below the second lower limit $U_2$ and the level of the motor vehicle is below a safe level, first, the motor vehicle is lifted to a safe level, and then control of the air flow L takes place in such a way that the air flow L lies above the second lower limit $U_2$ after control.

7. Method for controlling the air flow L in a level control system for a motor vehicle according to Claim 6, **characterized in that**, to lift the motor vehicle to a safe level, first, the compressed air present in the compressed air accumulator (4) is used, and, if this is not sufficient for lifting to the safe level, to lift the motor vehicle further, compressed air is sucked in from the atmosphere.

8. Method for controlling the air flow L in a level control system for a motor vehicle according to Claim 7, **characterized in that** in the event that compressed air is transferred out of the atmosphere into the level control system, the following procedure is adopted:

    - the air flow $L_1$ in the level control system is determined,
    - compressed air is transferred out of the atmosphere directly into at least one of the pneumatic springs (2a, ..., 2d),
    - then, the air flow $L_2$ in the level control system is determined,
    - the differential air flow $\Delta L = L_1 - L_2$ is determined,
    - a scavenging air flow is determined by means of the differential air flow $\Delta L$,
    - the scavenging air flow is transferred from the atmosphere into the compressed air accumulator (4) via an air drier (5),
    - an air flow corresponding to the scavenging air flow is discharged from the compressed air accumulator (4) into the atmosphere via the air drier (5).

9. Method for controlling the air flow L in a level control system for a motor vehicle according to Claim 8, **characterized in that** the scavenging air flow is transferred into the compressed air accumulator (4) once or in a plurality of cycles.

10. Method for controlling the air flow L in a level control system for a motor vehicle according to one of Claims 1 to 7, **characterized in that**, in the event that compressed air is transferred from the atmosphere into the level control system, the following procedure is adopted:

- the air flow $L_1$ in the level control system is determined,
- compressed air is transferred from the atmosphere into the level control system via an air drier (5),
- then, the air flow $L_2$ in the level control system is determined,
- the differential air flow $\Delta L = L_1 - L_2$ is determined,
- a regeneration air flow which is necessary in order to regenerate the air drier (5) is determined by means of the differential air flow $\Delta L$,
- at least the regeneration air flow is transferred from the atmosphere into the level control system via the air drier (5) and is discharged into the atmosphere again via the air drier (5) for the regeneration of the latter.

11. Method for controlling the air flow L in a level control system for a motor vehicle according to one of Claims 8 to 10, **characterized in that**, in addition to the scavenging air flow or regeneration air flow, an air flow $L_z$ is transferred into the compressed air accumulator (4) via the air drier (5) and is dimensioned such that, after the transfer of this air flow $L_z$, the air flow L in the level control system lies above the second lower limit $U_2$.

12. Method for controlling the air flow L in a level control system for a motor vehicle according to one of Claims 1 to 11, **characterized in that**, when the air flow L lies above the second upper limit $O_2$ and the level of the motor vehicle is above a safe level, compressed air is discharged from the pneumatic springs (2a, ..., 2d) simultaneously into the compressed air accumulator (4) and into the atmosphere.

13. Method for controlling the air flow L in a level control system for a motor vehicle according to Claim 12, **characterized in that** compressed air is discharged from the pneumatic springs (2a, ..., 2d) until the motor vehicle is at a safe level.

14. Level control system for a motor vehicle for carrying out the method according to one of Claims 1 to 9, which contains the following components:

- a compressor (6),
- a compressed air accumulator (4) which can be filled with air from the atmosphere and can be emptied into the atmosphere,
- at least one pneumatic spring (2a, ..., 2d), the pneumatic spring (2a, ..., 2d) being connected to the compressed air accumulator (4) via the compressor (6) in such a way that compressed air can be transferred out of the pneumatic spring (2a, ..., 2d) into the compressed air accumulator (4) and in the opposite direction,
- a control unit (36) which carries out a control of the air flow L in the level control system in such a way that the air flow L is located within specific limits,

**characterized in that**
two air flow intervals $I_1$, $I_2$ are predetermined in the control unit (36), the first air flow interval $I_1$ lying within the second air flow interval $I_2$, and the first air flow interval $I_1$ having a first upper limit $O_1$ and a first lower limit $U_1$ and the second air flow interval $I_2$ a second upper limit $O_2$ and a second lower limit $U_2$.

**Revendications**

1. Procédé de régulation du volume d'air L dans un équipement de régulation de niveau pour un véhicule automobile, lequel contient les composants suivante

- un compresseur (6)
- un accumulateur d'air comprimé (4) qui peut être rempli avec de l'air provenant de l'atmosphère et qui peut être vidé dans l'atmosphère,
- au moins un amortisseur pneumatique (2a, ..., 2d), l'amortisseur pneumatique (2a, ..., 2d) étant en liaison par le biais du compresseur (6) avec l'accumulateur d'air comprimé (4) de telle sorte que de l'air comprimé peut être acheminé de l'amortisseur pneumatique (2a, ..., 2d) dans l'accumulateur d'air comprimé (4) et dans le sens inverse,
la régulation étant réalisée de telle sorte que le volume d'air L se trouve à l'intérieur de limites définies,
**caractérisé en ce que**
- deux intervalles de volume d'air $I_1$, $I_2$ sont prédéfinis, le premier intervalle de volume d'air $I_1$ se trouvant à l'intérieur du deuxième intervalle de volume d'air $I_2$ et le premier intervalle de volume d'air $I_1$ possédant une

première limite supérieure $O_1$ et une première limite inférieure $U_1$ et le deuxième intervalle de volume d'air $I_2$ possédant une deuxième limite supérieure $O_2$ et une deuxième limite inférieure $U_2$ et

- dans tous les cas une régulation du volume d'air L est effectuée à l'intérieur du deuxième intervalle de volume d'air $I_2$ lorsque le volume d'air L se trouve en-dehors du deuxième intervalle de volume d'air $I_2$ avant la régulation et

- sous certaines conditions prédéfinies, une régulation du volume d'air L est effectuée à l'intérieur du premier intervalle de volume d'air $I_1$ lorsque le volume d'air L, avant la régulation, se trouve en-dehors du premier intervalle de volume d'air $I_1$ et à l'intérieur du deuxième intervalle de volume d'air $I_2$.

2. Procédé de régulation du volume d'air L dans un équipement de régulation de niveau pour un véhicule automobile selon la revendication 1, **caractérisé en ce que** dans le cas où le volume d'air L se trouve en-dehors du deuxième intervalle de volume d'air $I_2$, une régulation est effectuée de telle sorte que le volume d'air L, après la régulation,

- se trouve entre la deuxième limite inférieure $U_2$ et la première limite inférieure $U_1$ si le volume d'air L, avant la régulation, se trouvait au-dessous de la deuxième limite inférieure $U_2$, et
- se trouve entre la deuxième limite supérieure $O_2$ et la première limite supérieure $O_1$ si le volume d'air L, avant la régulation, se trouvait au-dessus de la deuxième limite supérieure $O_2$.

3. Procédé de régulation du volume d'air L dans un équipement de régulation de niveau pour un véhicule automobile selon l'une des revendications 1 à 2, **caractérisé en ce que** lorsque le volume d'air L se trouve en-dehors du premier intervalle de volume d'air $I_1$ et à l'intérieur du deuxième intervalle de volume d'air $I_2$, une régulation du volume d'air L est effectuée à l'intérieur du premier intervalle de volume d'air $I_1$ à la condition que le véhicule automobile a préalablement été mis en service.

4. Procédé de régulation du volume d'air L dans un équipement de régulation de niveau pour un véhicule automobile selon la revendication 3, **caractérisé en ce qu'**une régulation du volume d'air L est effectuée à l'intérieur du premier intervalle de volume d'air $I_1$ à la condition supplémentaire qu'une période donnée se soit écoulée après la mise en service

5. Procédé de régulation du volume d'air dans un équipement de régulation de niveau pour un véhicule automobile selon la revendication 3, **caractérisé en ce qu'**après la mise en service du véhicule automobile, des mesures du volume d'air L sont effectuées et une régulation du volume d'air L est effectuée à l'intérieur du premier intervalle de volume d'air $I_1$ à la condition supplémentaire que le volume d'air L mesuré se soit stabilisé.

6. Procédé de régulation du volume d'air L dans un équipement de régulation de niveau pour un véhicule automobile selon l'une des revendications 1 à 5, **caractérisé en ce que** lorsque le volume d'air L se trouve au-dessous de la deuxième limite inférieure $U_2$ et le niveau du véhicule automobile se trouve au-dessous d'un niveau sécurisé, le véhicule automobile est tout d'abord relevé à un niveau sécurisé et une régulation du volume d'air L est ensuite effectuée de telle sorte que le volume d'air L, après la régulation, se trouve au-dessus de la deuxième limite inférieure $U_2$.

7. Procédé de régulation du volume d'air L dans un équipement de régulation de niveau pour un véhicule automobile selon la revendication 6, **caractérisé en ce que** pour relever le véhicule automobile à un niveau sécurisé, l'air comprimé présent dans l'accumulateur d'air comprimé (4) est tout d'abord utilisé et, dans le cas où celui-ci ne suffit pas pour le relevage au niveau sécurisé, de l'air comprimé est aspiré depuis l'atmosphère pour poursuivre le relevage du véhicule automobile.

8. Procédé de régulation du volume d'air L dans un équipement de régulation de niveau pour un véhicule automobile selon la revendication 7, **caractérisé en ce que** dans le cas où de l'air comprimé est acheminé de l'atmosphère dans l'équipement de régulation de niveau, il est procédé comme suit :

- le volume d'air $L_1$ dans l'équipement de régulation de niveau est déterminé,
- de l'air comprimé est acheminé directement de l'atmosphère dans au moins l'un des amortisseurs pneumatiques (2a, ..., 2d),
- le volume d'air $L_2$ dans l'équipement de régulation de niveau est ensuite déterminé,
- le volume d'air différentiel $\Delta L = L_1 - L_2$ est déterminé,
- un volume d'air de rinçage est déterminé au moyen du volume d'air différentiel $\Delta L$,
- le volume d'air de rinçage est acheminé depuis l'atmosphère dans l'accumulateur d'air comprimé (4) par le biais d'un dessiccateur d'air (5),
- un volume d'air correspondant au volume d'air de rinçage est évacué hors de l'accumulateur d'air comprimé (4) dans l'atmosphère par le biais du dessiccateur d'air (5).

9. Procédé de régulation du volume d'air L dans un équipement de régulation de niveau pour un véhicule automobile selon la revendication 8, **caractérisé en ce que** le volume d'air de rinçage est acheminé en une fois ou en plusieurs cycles dans l'accumulateur d'air comprimé (4).

10. Procédé de régulation du volume d'air L dans un équipement de régulation de niveau pour un véhicule automobile selon l'une des revendications 1 à 7, **caractérisé en ce que** dans le cas où l'air comprimé est acheminé depuis l'atmosphère dans l'équipement de régulation de niveau, il est procédé comme suit :

- le volume d'air $L_1$ dans l'équipement de régulation de niveau est déterminé,
- de l'air comprimé est acheminé depuis l'atmosphère dans l'équipement de régulation de niveau par le biais d'un dessiccateur d'air (5),
- le volume d'air $L_2$ dans l'équipement de régulation de niveau est ensuite déterminé,
- le volume d'air différentiel $\Delta L = L_1 - L_2$ est déterminé,
- un volume d'air de régénération qui est nécessaire pour régénérer le dessiccateur d'air (5) est déterminé au moyen du volume d'air différentiel $\Delta L$,
- au moins le volume d'air de régénération est acheminé depuis l'atmosphère dans l'équipement de régulation de niveau par le biais du dessiccateur d'air (5) puis de nouveau évacué dans l'atmosphère par le biais du dessiccateur d'air en vue de la régénération du dessiccateur d'air (5).

11. Procédé de régulation du volume d'air L dans un équipement de régulation de niveau pour un véhicule automobile selon l'une des revendications 8 à 10, **caractérisé en ce qu'**en plus du volume d'air de rinçage ou du volume d'air de régénération, un volume d'air $L_z$ est acheminé dans l'accumulateur d'air comprimé (4) par le biais du dessiccateur d'air (5), lequel est dimensionné de telle sorte qu'après l'acheminement de ce volume d'air $L_z$, le volume d'air L dans l'équipement de régulation de niveau se trouve au-dessus de la deuxième limite inférieure $U_2$.

12. Procédé de régulation du volume d'air L dans un équipement de régulation de niveau pour un véhicule automobile selon l'une des revendications 1 à 11, **caractérisé en ce que** lorsque le volume d'air L se trouve au-dessus de la deuxième limite supérieure $O_2$ et le niveau du véhicule automobile se trouve au-dessus d'un niveau sécurisé, de l'air comprimé est évacué hors des amortisseurs pneumatiques (2a, ..., 2d) simultanément dans l'accumulateur d'air comprimé (4) et dans l'atmosphère.

13. Procédé de régulation du volume d'air L dans un équipement de régulation de niveau pour un véhicule automobile selon la revendication 12, **caractérisé en ce que** de l'air comprimé est évacué hors des amortisseurs pneumatiques (2a, ..., 2d) jusqu'à ce que le véhicule automobile se trouve à un niveau sécurisé.

14. Équipement de régulation de niveau pour un véhicule automobile destiné à mettre en oeuvre le procédé selon l'une des revendications 1 à 9, lequel contient les composants suivants :

- un compresseur (6)
- un accumulateur d'air comprimé (4) qui peut être rempli avec de l'air provenant de l'atmosphère et qui peut être vidé dans l'atmosphère,
- au moins un amortisseur pneumatique (2a, ..., 2d), l'amortisseur pneumatique (2a, ..., 2d) étant en liaison par le biais du compresseur (6) avec l'accumulateur d'air comprimé (4) de telle sorte que de l'air comprimé peut être acheminé hors de l'amortisseur pneumatique (2a, ..., 2d) dans l'accumulateur d'air comprimé (4) et dans le sens inverse,
- une unité de commande (36) qui effectue une régulation du volume d'air L dans l'équipement de régulation de niveau de telle sorte que le volume d'air L se trouve à l'intérieur de limites définies,

**caractérisé en ce que**
deux intervalles de volume d'air $I_1$, $I_2$ sont prédéfinis dans l'unité de commande (36), le premier intervalle de volume d'air $I_1$ se trouvant à l'intérieur du deuxième intervalle de volume d'air $I_2$ et le premier intervalle de volume d'air $I_2$ possédant une première limite supérieure $O_1$ et une première limite inférieure $U_1$ et le deuxième intervalle de volume d'air $I_2$ possédant une deuxième limite supérieure $O_2$ et une deuxième limite inférieure $U_2$.

FIG. 1

FIG. 2

FIG. 3

FIG. 4

$O_2$  (20 °C)

$O_1$  (0 °C)

(–10 °C)

$U_1$  (–20 °C)

$U_2$  (–40 °C)

$I_2$  $I_1$

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10122567 C1
- DE 10160972 C1
- DE 19959556 C1